# EUROPÄISCHE PATENTSCHRIFT

(11) **EP 3 746 750 B1**
(45) Veröffentlichungstag und Bekanntmachung des Hinweises auf die Patenterteilung: **05.01.2022**
(21) Anmeldenummer: 19701622.3
(22) Anmeldetag: 23.01.2019
(51) Int. Cl.: G01F 1/84, G01F 15/02

(54) **CORIOLIS-MESSAUFNEHMER UND CORIOLIS-MESSGERÄT**
CORIOLIS MEASURING SENSOR, AND CORIOLIS MEASURING DEVICE
CAPTEUR DE MESURE À EFFET CORIOLIS ET APPAREIL DE MESURE À EFFET CORIOLIS

(30) Priorität: 02.02.2018 DE 102018102379
(43) Veröffentlichungstag der Anmeldung: 09.12.2020
(73) Patentinhaber: Endress+Hauser Flowtec AG, 4153 Reinach (CH)
(72) Erfinder: RAMSEYER, Severin, 4142 Münchenstein (CH); SCHWENTER, Benjamin, 4226 Breitenbach (CH)
(74) Vertreter: Andres, Angelika Maria
(86) Internationale Anmeldenummer: PCT/EP2019/051603
(87) Internationale Veröffentlichungsnummer: WO 2019/149592

(56) Entgegenhaltungen:
- WO-A1-2009/136943
- DE-A1-102015 120 087
- US-A- 3 155 883
- US-A- 5 349 872
- US-A1- 2011 072 912

## Beschreibung

Die Erfindung betrifft einen Coriolis-Messaufnehmer und ein Coriolis-Messgerät mit einer in einen Sensor oder in einen Erreger integrierten Temperaturmessvorrichtung.

Coriolis-Messgeräte nutzen die Tatsache aus, dass eine einem Schwingungsrohr aufgeprägte Schwingung abhängig von einem Durchfluss eines Mediums durch das Schwingungsrohr auf eine charakteristische Art und Weise gegenüber einer Schwingung ohne Durchfluss verzerrt wird.

Das Aufprägen und Erfassen dieser Schwingungen wird mittels Erreger bzw. Sensoren bewerkstelligt. Da das Schwingungsverhalten des Schwingungsrohrs auch von seiner Temperatur und Temperaturverteilung beeinflusst ist, werden zusätzliche Temperatursensoren eingesetzt, welche die Temperatur, bzw. Temperaturverteilung erfassen, siehe beispielsweise die DE102015120087A1.

Die US2011072912A1 beschreibt ein Coriolis-Durchflussmessgerät mit RTD-Sensoren, welche mit Erregern bzw. Sensoren des Coriolis-Durchflussmessgeräts kontaktiert sind.

Die DE102015120087A1 beschreibt ein Coriolis-Messgerät, bei welchem Spulen von Sensoren bzw. Erreger jeweils auf Leiterplatten aufgebracht sind.

Die US5349872A beschreibt ein Coriolis-Messgerät mit feststehenden Sensor- bzw. Erregerspulen.

Die US3155883A beschreibt einen elektromechanischen Transducer mit einem Thermostat umfassend ein Gehäuse, welcher zur Messung eines Diaphragmas eingerichtet ist.

Das Einrichten von zusätzlichen Temperatursensoren erhöht die Komplexität der Fertigung und die Fehleranfälligkeit von Coriolis-Messgeräten.

Aufgabe ist es daher, einen Coriolis-Messaufnehmer sowie ein Coriolis-Durchflussmessgerät vorzuschlagen, bei welchem Temperatursensoren auf eine robuste Art und Weise integriert sind.

Die Aufgabe wird gelöst durch einen Coriolis-Messaufnehmer gemäß dem unabhängigen Anspruch 1 sowie durch ein Coriolis-Messgerät gemäß dem unabhängigen Anspruch 14.

Ein erfindungsgemäßer Coriolis-Messaufnehmer eines Coriolis-Messgeräts zum Erfassen eines Massedurchflusses oder einer Dichte eines durch mindestens ein Messrohr des Coriolis-Messgeräts strömenden Mediums umfasst:
das mindestens eine Messrohr mit einem Einlauf und einem Auslauf, welches dazu eingerichtet ist, das Medium zwischen Einlauf und Auslauf zu führen;
mindestens einen Erreger, welcher dazu eingerichtet ist, das mindestens eine Messrohr zu Schwingungen anzuregen;
mindestens einen Sensor, welcher dazu eingerichtet ist, die Auslenkung der Schwingungen mindestens eines Messrohrs zu erfassen;
wobei mindestens ein Erreger sowie mindestens Sensor jeweils eine Spulenvorrichtung mit jeweils mindestens einer Spule sowie jeweils eine Magnetvorrichtung aufweisen, wobei die Magnetvorrichtung und die Spulenvorrichtung relativ zueinander bewegbar sind,
wobei mindestens ein Erreger oder mindestens ein Sensor eine integrierte Temperaturmessvorrichtung aufweist, welche dazu eingerichtet ist, die Temperatur des Erregers bzw. des Sensors messbar zu machen,
wobei die Spulenvorrichtung eine Leiterplatte mit mindestens einer Leiterplattenschicht aufweist, wobei die Spule auf mindestens einer ersten Seitenfläche einer Leiterplattenschicht aufgebracht ist, und wobei die Temperaturmessvorrichtung eine Widerstandsmessstrecke aus einem elektrisch leitfähigen Material aufweist, welche auf mindestens der ersten Seitenfläche und/oder auf mindestens einer zweiten Seitenfläche anders zur ersten Seitenfläche der Leiterplattenschicht aufgebracht ist.

Durch die integrierte Temperaturmessvorrichtung kann eine elektrische Verbindung der Temperaturmessvorrichtung mit der elektronischen Mess-/Betriebsschaltung in einem Verbindungskabel angeordnet werden, in welchem auch eine elektrische Verbindung des Erregers bzw. Sensors angeordnet ist. Auf diese Weise lassen sich Kabel im Messaufnehmer einsparen und die Temperatur bzw. eine Temperaturverteilung eines Schwingungsrohrs mittels des mindestens einen Erregers bzw. Sensors erfassen.

Beispielsweise kann die Leiterplatte oder die Magnetvorrichtung am Messrohr befestigt sein, wobei die zugehörige Magnetvorrichtung bzw. die Leiterplatte translatorisch und rotatorisch feststehend ist, oder an einem zweiten Messrohr oder einer Gegenschwingvorrichtung angebracht ist. In ersterem Fall nimmt die Leiterplatte die Temperatur des Messrohrs direkt auf, im zweiten Fall nimmt die Leiterplatte die Temperatur des Messrohrs zumindest teilweise indirekt über Wärmestrahlung der Magnetvorrichtung auf. Bei einer translatorisch und rotatorisch feststehenden Magnetvorrichtung bzw. Leiterplatte kann die Magnetvorrichtung bzw. die Leiterplatte beispielsweise über ein Trägerrohr des Coriolis-Messgeräts befestigt sein, wobei Eigenfrequenzen des Trägerrohrs nicht mit Eigenfrequenzen des Messrohrs übereinstimmen und somit keine Schwingungskopplung stattfindet.

In einer Ausgestaltung ist die Leiterplatte eine Multilayerleiterplatte und weist eine Mehrzahl von Leiterplattenschichten auf, welche Leiterplattenschichten gestapelt und über Seitenflächen mit benachbarten Leiterplattenschichten verbunden sind,
wobei die Spule mehrere Teilspulen und zwei Spulenkontaktierungen aufweist, welche Teilspulen jeweils auf verschiedenen ersten Seitenflächen angeordnet sind,
wobei jeweils eine Spulenkontaktierung an einem Ende der Spule angeordnet ist, und wobei die Leiterplatte erste Durchkontaktierungen aufweist, welche dazu eingerichtet sind, benachbarte Teilspulen elektrisch miteinander zu verbinden,
wobei die Widerstandsmessstrecke mindestens zwei Messstreckenkontaktierungen aufweist.

Durch die Verwendung einer Multilayerleiterplatte kann eine Spule gegenüber einer Leiterplatte bestehend aus einer Leiterplattenschicht also eine größere Induktivität aufweisen, was eine Erreger- bzw. Sensorleistung beträchtlich verbessert.

In einer Ausgestaltung weist die Widerstandsmessstrecke eine Induktivität auf, welche mindestens 10-fach und insbesondere mindestens 50-fach und bevorzugt mindestens 200-fach geringer ist, als eine Induktivität der Spule. Dadurch lässt sich ein gegenseitiger Einfluss zwischen Spule und Widerstandsmessstrecke minimieren, womit eine Erreger- bzw. Sensorleistung verbessert wird.

In einer Ausgestaltung ist ein erster Teil der Widerstandsmessstrecke auf einer ersten Seitenfläche oder einer zweiten Seitenfläche angeordnet, wobei der erste Teil zumindest bereichsweise mäanderförmig ausgestaltet ist. Auf diese Weise lässt sich die Induktivität der Widerstandsmessstrecke senken und ein Widerstand der Widerstandsmessstrecke optimieren, um eine Messgenauigkeit zu erhöhen.

In einer Ausgestaltung weist die Magnetvorrichtung mindestens einen Permanentmagnet auf, welcher zumindest einen Bereich aufweist, welcher in Richtung einer Spulenachse zur Spule versetzt ist. Dadurch kann der Permanentmagnet senkrecht oder parallel zur Spulenachse bewegt werden, um eine elektrische Spannung in der Spule zu induzieren, oder um eine Kraft mittels eines über die Spule erzeugten Magnetfelds aufzunehmen.

In einer Ausgestaltung sind die Spule und/oder die Widerstandmessstrecke mittels einer Ätztechnik auf die entsprechenden Seitenflächen aufgebracht
In einer Ausgestaltung weisen die Spule bzw. die Widerstandmessstrecke definierende Leiterbahnen eine Breite von weniger als 200 Mikrometer und insbesondere weniger als 100 Mikrometer und bevorzugt weniger als 70 Mikrometer auf. Eine Verringerung der Breite der Leiterbahnen ermöglicht eine Erhöhung einer Länge der Spule bzw. der Widerstandsmessstrecke. Dadurch besteht mehr Spielraum, die Induktivität der Spule bzw. den Widerstand der Widerstandsmessstrecke zu optimieren.

In einer Ausgestaltung weisen bezüglich eines Messrohrs mindestens ein Erreger und mindestens ein Sensor oder mindestens zwei Erreger oder mindestens zwei Sensoren eine integrierte Temperaturmessvorrichtung auf,
wobei eine räumliche Temperaturverteilung des entsprechenden Messrohrs bestimmbar ist, womit ein Schwingverhalten des entsprechenden Messrohrs bestimmbar ist.

Durch Kenntnis des Temperaturverlaufs kann eine Durchfluss- oder Dichtebestimmung des durch das Messrohr strömenden Mediums korrigiert werden.

In einer Ausgestaltung weist das Durchflussmessgerät ein Trägerrohr mit einer Trägerrohrkammer auf, welche Trägerrohrkammer dazu eingerichtet ist, das mindestens eine Messrohr zumindest abschnittsweise zu behausen.

In einer Ausgestaltung ist die Spule eines Erregers dazu eingerichtet, die zugehörige Magnetvorrichtung mit einer Kraft zu beaufschlagen, und wobei die Magnetvorrichtung eines Sensors dazu eingerichtet ist, in der Spule der zugehörigen Spulenvorrichtung eine elektrische Spannung zu induzieren.

In einer Ausgestaltung ist jedes Messrohr zumindest abschnittsweise gekrümmt, und wobei die Krümmung jedes Messrohrs in einem Ruhezustand jeweils eine Ebene definiert;
wobei der mindestens eine Erreger dazu eingerichtet ist, das Messrohr mittels Auslenkung der Krümmung des Messrohrs senkrecht zur zugehörigen Ebene zu Schwingungen anzuregen.

In einer Ausgestaltung weist der Messaufnehmer zwei Sammler auf, wobei ein erster Sammler auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler dazu eingerichtet ist, das aus dem Auslauf des mindestens einen Messrohrs austretende Medium aufzunehmen und in die Rohrleitung zu führen.

In einer Ausgestaltung weist der Messaufnehmer zwei Prozessanschlüsse, insbesondere Flansche auf, welche dazu eingerichtet sind, den Messaufnehmer mit einer Rohrleitung zu verbinden.

In einer Ausgestaltung ist die Magnetvorrichtung mechanisch mit dem zugehörigen Messrohr verbunden, und wobei die Spule bzgl. des Einlaufs bzw. Auslaufs translatorisch sowie rotatorisch fixiert ist.

Ein erfindungsgemäßes Coriolis-Messgerät umfasst:
Einen Coriolis-Messaufnehmer nach einem der vorigen Ansprüche;
eine elektronische Mess-/Betriebsschaltung, wobei die elektronische Mess-/Betriebsschaltung dazu eingerichtet ist, die Spulen und gegebenenfalls zugehörige Temperaturmessvorrichtung elektrisch zu beaufschlagen, wobei die Beaufschlagung der Spule sowie der Temperaturmessvorrichtung mittels separater elektrischer Verbindungen oder mittels eines Multiplexings bewerkstelligt ist,
wobei die mindestens eine elektrische Verbindung eines Sensors bzw. Erregers mittels einer Kabelführung zur elektronischen Mess-/Betriebsschaltung geführt ist,
wobei die elektronische Mess-/Betriebsschaltung weiter dazu eingerichtet ist, Durchflussmesswerte und/oder Dichtemesswerte zu ermitteln und bereitzustellen.

Im Folgenden wird die Erfindung anhand von Ausführungsbeispielen beschrieben.

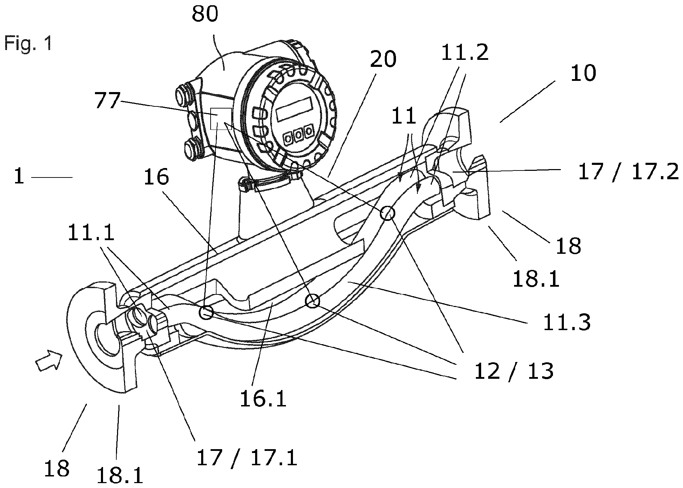

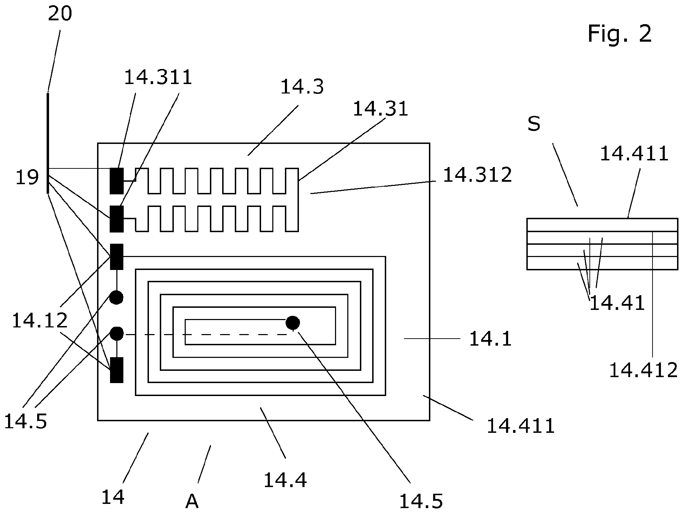

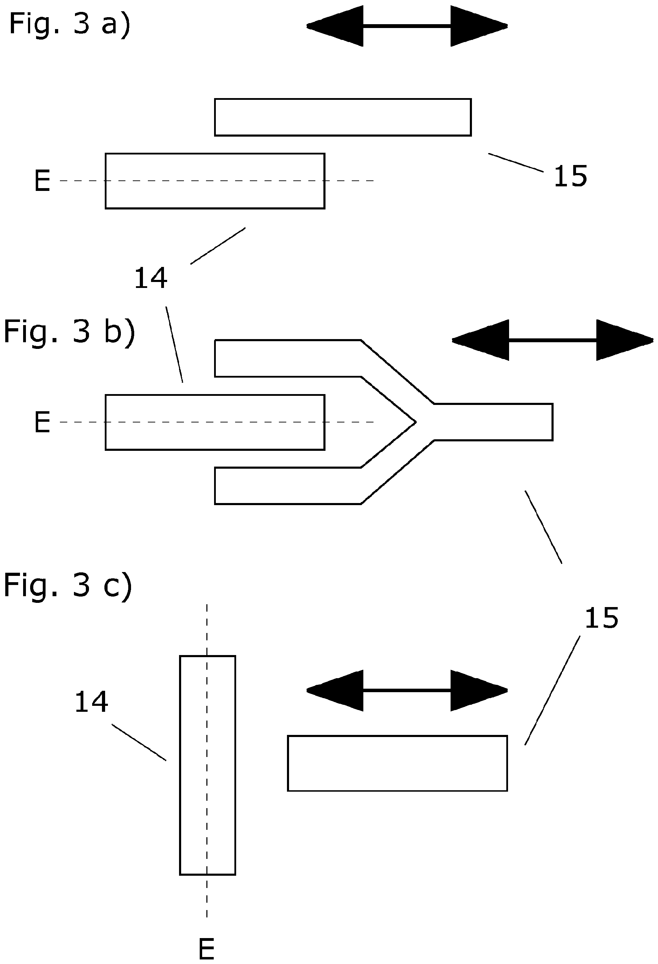

Fig. 1 skizziert ein beispielhaftes Coriolis-Messgerät mit einem beispielshaften Coriolis-Messaufnehmer umfassend erfindungsgemäße Erreger bzw. Sensoren; Fig. 2 skizziert eine Aufsicht einer Leiterplatte eines beispielhaften erfindungsgemäßen Erregers bzw. Sensors und Figs. 3a) bis 3c) skizzieren beispielhafte Ausgestaltungen eines erfindungsgemäßen Erregers bzw. Sensors.

Fig.1 skizziert ein Coriolis-Messgerät 1 zum Messen eines Durchflusses oder einer Dichte eines durch ein Messrohr 11 des Messgeräts strömenden Mediums mit einem Messaufnehmer 10 und einem an den Messaufnehmer angeschlossenen Elektronikgehäuse 80, in welchem Elektronikgehäuse eine elektronische Mess-/Betriebsschaltung 77 zum Betreiben von Erregern 12 bzw. Sensoren 13 und zum Bereitstellen von Durchfluss- und/oder Dichtemesswerten des Mediums angeordnet ist. Der Messaufnehmer 10 umfasst ein Trägerrohr 15 mit einer Trägerrohrkammer 15.1, in welcher Trägerrohrkammer zwei Messrohre 11 angeordnet sind. Das Trägerrohr weist an seinen Enden jeweils einen Prozessanschluss 17, insbesondere einen Flansch 17.1 auf, mittels welcher Prozessanschlüsse 17 das Coriolis-Messgerät in eine Rohrleitung integrierbar ist. Im Bereich der Prozessanschlüsse weist der Messaufnehmer 10 jeweils einen Sammler 16 auf, wobei ein stromaufwärtsgerichteter Sammler 16 dazu eingerichtet ist, ein aus der Rohrleitung in den Messaufnehmer einströmendes Medium aufzunehmen und gleichmäßig auf Einläufe 11.1 der beiden Messrohre zu verteilen. Ein stromabwärtsgerichteter zweiter Sammler 16.2 ist dazu eingerichtet, das aus Ausläufen 11.2 der Messrohre herausströmende Medium aufzunehmen und in die Rohrleitung zu überführen. Zumindest ein Erreger 12 und zumindest ein Sensor 13 sind angeordnet, um die Messrohre 11 zu Schwingungen anzuregen bzw. um die Schwingungen zu erfassen. Alternativ zu der hier gezeigten Ausgestaltung des Coriolis-Messgeräts kann das Messgerät auch nur ein Messrohr oder auch vier Messrohre aufweisen, wobei die Messrohre beispielsweise auch nur teilweise durch die Trägerrohrkammer 15.1 behaust sein können. Es sind Ausgestaltungen mit gekrümmten Messrohren wie hier gezeigt denkbar und mit geraden Messrohren denkbar. Mindestens ein Erreger sowie mindestens ein Sensor weisen jeweils eine Spulenvorrichtung 14 (siehe Fig. 2) mit jeweils mindestens einer Spule 14.1 sowie jeweils eine Magnetvorrichtung 14.2 (siehe Figs. 3 a) bis c)) auf, wobei die Magnetvorrichtung und die Spulenvorrichtung relativ zueinander bewegbar sind. Die Spulenvorrichtung und die Magnetvorrichtung eines Sensors sind dabei so im Messaufnehmer angeordnet, dass Schwingungen des mindestens einen Messrohrs eine Relativbewegung zwischen Spulenvorrichtung und Magnetvorrichtung verursachen. Eine dadurch verursachte induzierte elektrische Spannung kann als Messsignal abgegriffen und durch die elektronische Mess-/Betriebsschaltung 77 ausgewertet werden. Bei einem Erreger hingegen wird durch Anlegen einer elektrischen Spannung an die Spule eine Kraft zwischen Spulenvorrichtung und Magnetvorrichtung bewirkt, welche zur Erregung einer Messrohrschwingung genutzt wird. Durch Einrichten mindestens eines erfindungsgemäßen Sensors 12 bzw. Erregers 13 (siehe Fig. 2 und Figs. 3 a) bis c)) kann mittels des Sensors bzw. Erregers die Temperatur mindestens eines Messrohrs bestimmt werden, um darüber auf Schwingungseigenschaften des Messrohrs zu schließen, wobei weniger Kabelführungen zum Herstellen elektrischer Verbindungen zwischen einer elektronischen Mess-/Betriebsschaltung 77 und Sensor bzw. Erreger notwendig sind. Bei Einrichten mehrerer erfindungsgemäßer Elemente, wobei ein Element ein Sensor oder ein Erreger ist, kann eine räumliche Temperaturverteilung mindestens eines Messrohrs erfasst werden und somit weitere Details der Schwingungseigenschaften des Messrohrs erfasst werden.

Fig. 2 skizziert eine schematische Aufsicht A sowie maßstabsmäßig verkleinert eine schematische Seitenansicht S auf eine erfindungsgemäße Spulenvorrichtung 14 mit einer Leiterplatte 14.4, welche Leiterplatte eine Spule 14.1 aufweist. Die Leiterplatte weist dabei mehrere Leiterplattenschichten 14.41 mit jeweils einer ersten Seitenfläche 14.411 und einer zweiten Seitenfläche 14.412 auf. Die Spule umfasst mehrere Teilspulen 14.11, welche auf verschiedenen Seitenflächen angeordnet sind und mittels Durchkontaktierungen 14.5 elektrisch verbunden sind. Die Spule weist an ihren Enden jeweils eine Spulenkontaktierung 14.12 auf, mittels welchen Spulenkontaktierungen die Spule mit der elektronischen Mess-/Betriebsschaltung über elektrische Verbindungen 19 kontaktierbar ist. Wie hier gezeigt, kann eine Spulenkontaktierung mit einer Durchkontaktierung 14.5 verbunden sein, um einen elektrischen Kontakt mit einem Ende einer Teilspule herzustellen. Zusätzlich zur Spule 14.1 weist die Leiterplatte 14.4 erfindungsgemäß eine integrierte Temperaturmessvorrichtung 14.3 auf, welche wie hier dargestellt eine Widerstandsmessstrecke 14.31 mit Messstreckenkontaktierungen 14.311 sein kann. Äquivalent zu den Spulenkontaktierungen sind die Messtreckenkontaktierungen dazu eingerichtet, die elektronischen Mess-/Betriebsschaltung mit der Widerstandsmessstrecke über elektrische Verbindungen 19 zu verbinden. Die Widerstandsmessstrecke kann wie hier gezeigt nur auf einer Seitenfläche angeordnet sein, oder sich ähnlich wie die Spule über mehrere Seitenflächen erstrecken. Die Widerstandsmessstrecke ist dabei vorteilshafterweise mäanderartig ausgestaltet, um eine Induktivität der der Widerstandsmessstrecke zu reduzieren und somit einen Einfluss auf die Spule zu reduzieren. Alternativ zur hier gezeigten Ausgestaltung kann die Leiterplatte auch nur eine Leiterplattenschicht und/oder die Spule nur auf einer Seitenfläche angeordnet sein. Die elektrischen Verbindungen 19 sind dabei vorteilhafterweise in einer Kabelführung 20 zusammengefasst.

Figs. 3 a) bis c) skizzieren schematisch beispielhafte relative Beweglichkeiten der Spulenvorrichtung 14 und der Magnetvorrichtung 15 zueinander. Beispielsweise kann wie in a) und b) gezeigten Ausführungsbeispiel die Magnetvorrichtung 15 parallel zu einer Ebene E beweglich sein, welche parallel zu den Seitenflächen der Leiterplatte ist. Die Magnetvorrichtung kann dabei die Leiterplatte abschnittsweise umgreifen. Die Magnetvorrichtung kann auch senkrecht zur Ebene E beweglich sein, siehe c).

### Bezugszeichenliste

- 1: Coriolis-Messgerät
- 10: Coriolis-Messaufnehmer
- 11: Messrohr
- 11.1: Einlauf
- 11.2: Auslauf
- 11.3: Krümmung
- 12: Erreger
- 13: Sensor
- 14: Spulenvorrichtung
- 14.1: Spule
- 14.11: Teilspule
- 14.12: Spulenkontaktierung
- 14.3: integrierte Temperaturmessvorrichtung
- 14.31: Widerstandsmessstrecke
- 14.311: Messstreckenkontaktierung
- 14.312: Erster Teil der Widerstandsmessstrecke
- 14.4: Leiterplatte
- 14.41: Leiterplattenschicht
- 14.411: erste Seitenfläche
- 14.412: zweite Seitenfläche
- 14.5: Durchkontaktierung
- 15: Magnetvorrichtung
- 15.1: Permanentmagnet
- 16: Trägerrohr
- 16.1: Trägerrohrkammer
- 17: Sammler
- 17.1: erster Sammler
- 17.2: zweiter Sammler
- 18: Prozessanschluss
- 18.1: Flansch
- 19: elektrische Verbindungen
- 20: Kabelführung
- 77: elektronische Mess-/Betriebsschaltung
- 80: Elektronikgehäuse
- A: Aufsicht
- S: Seitenansicht

## Patentansprüche

1. Coriolis-Messaufnehmer (10) eines Coriolis-Messgeräts (1) zum Erfassen eines Massedurchflusses oder einer Dichte eines durch mindestens ein Messrohr des Coriolis-Messgeräts strömenden Mediums, umfassend:
das mindestens eine Messrohr (11) mit einem Einlauf (11.1) und einem Auslauf (11.2), welches dazu eingerichtet ist, das Medium zwischen Einlauf und Auslauf zu führen;
mindestens einen Erreger (12), welcher dazu eingerichtet ist, das mindestens eine Messrohr zu Schwingungen anzuregen;
mindestens einen Sensor (13), welcher dazu eingerichtet ist, die Auslenkung der Schwingungen mindestens eines Messrohrs zu erfassen;
wobei mindestens ein Erreger sowie mindestens ein Sensor jeweils eine Spulenvorrichtung (14) mit jeweils mindestens einer Spule (14.1), sowie jeweils eine Magnetvorrichtung (14.2) aufweisen, wobei die Magnetvorrichtung und die Spulenvorrichtung relativ zueinander bewegbar sind,
wobei die Spulenvorrichtung eine Leiterplatte (14.4) mit mindestens einer Leiterplattenschicht (14.41) aufweist, wobei die Spule auf mindestens einer ersten Seitenfläche (14.411) einer Leiterplattenschicht aufgebracht ist,
**dadurch gekennzeichnet, dass** mindestens ein Erreger oder mindestens ein Sensor eine integrierte Temperaturmessvorrichtung (14.3) zum Messen der Temperatur des Erregers bzw. des Sensors aufweist,
wobei die Temperaturmessvorrichtung eine Widerstandsmessstrecke (14.31) aus einem elektrisch leitfähigen Material aufweist, welche auf mindestens der ersten Seitenfläche und/oder auf mindestens einer zweiten Seitenfläche (14.411, 14.412) anders zur ersten Seitenfläche der Leiterplattenschicht aufgebracht ist.

2. Coriolis-Messaufnehmer nach Anspruch 1,
wobei die Leiterplatte eine Multilayerleiterplatte ist und eine Mehrzahl von Leiterplattenschichten (14.41) aufweist, welche Leiterplattenschichten gestapelt und über Seitenflächen mit benachbarten Leiterplattenschichten verbunden sind,
wobei die Spule mehrere Teilspulen (14.11) und zwei Spulenkontaktierungen (14.12) aufweist, welche Teilspulen jeweils auf verschiedenen ersten Seitenflächen angeordnet sind, wobei jeweils eine Spulenkontaktierung (14.12) an einem Ende der Spule angeordnet ist, und wobei die Leiterplatte erste Durchkontaktierungen (14.5) aufweist, welche dazu eingerichtet sind, benachbarte Teilspulen elektrisch miteinander zu verbinden,
wobei die Widerstandsmessstrecke zwei Messstreckenkontaktierungen (14.311) aufweist.

3. Coriolis-Messaufnehmer nach Anspruch 1 oder 2,
wobei die Widerstandsmessstrecke (14.31) eine Induktivität aufweist, welche mindestens 10-fach und insbesondere mindestens 50-fach und bevorzugt mindestens 200-fach geringer ist, als eine Induktivität der Spule.

4. Coriolis-Messaufnehmer nach Anspruch 3,
wobei ein erster Teil der Widerstandsmessstrecke (14.312) auf einer ersten Seitenfläche oder einer zweiten Seitenfläche angeordnet ist, wobei zumindest der erste Teil zumindest bereichsweise mäanderförmig ausgestaltet ist.

5. Coriolis-Messaufnehmer nach einem der vorigen Ansprüche,
wobei die Magnetvorrichtung (14.2) mindestens einen Permanentmagnet (14.21) aufweist, welcher zumindest einen Bereich aufweist, welcher in Richtung einer Spulenachse zur Spule versetzt ist.

6. Coriolis-Messaufnehmer nach einem der vorigen Ansprüche,
wobei die Spule und/oder die Widerstandmessstrecke insbesondere mittels einer Ätztechnik oder Drucktechnik oder Siebdrucktechnik oder photochemisch auf die entsprechenden Seitenflächen aufgebracht sind,

7. Coriolis-Messaufnehmer nach einem der vorigen Ansprüche,
wobei die Spule bzw. die Widerstandmessstrecke definierende Leiterbahnen eine Breite von weniger als 200 Mikrometer und insbesondere weniger als 100 Mikrometer und bevorzugt weniger als 70 Mikrometer aufweisen.

8. Coriolis-Messaufnehmer nach einem der vorigen Ansprüche,
wobei bezüglich eines Messrohrs mindestens ein Erreger und mindestens ein Sensor oder mindestens zwei Erreger oder mindestens zwei Sensoren eine integrierte Temperaturmessvorrichtung aufweisen,
wobei eine räumliche Temperaturverteilung des entsprechenden Messrohrs bestimmbar ist, womit ein Schwingverhalten des entsprechenden Messrohrs bestimmbar ist.

9. Coriolis-Messaufnehmer nach einem der vorigen Ansprüche,
wobei der Messaufnehmer ein Trägerrohr (16) mit einer Trägerrohrkammer (16.1) aufweist, welche Trägerrohrkammer dazu eingerichtet ist, das mindestens eine Messrohr zumindest abschnittsweise zu behausen.

10. Coriolis-Messaufnehmer nach einem der vorigen Ansprüche,
wobei die Spule eines Erregers dazu eingerichtet ist, die zugehörige Magnetvorrichtung mit einer Kraft zu beaufschlagen, und wobei die Magnetvorrichtung eines Sensors dazu eingerichtet ist, in der Spule der zugehörigen Spulenvorrichtung eine elektrische Spannung zu induzieren.

11. Coriolis-Messaufnehmer nach einem der vorigen Ansprüche,
wobei der Messaufnehmer zwei Sammler (17) aufweist, wobei ein erster Sammler (17.1) auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler (17.2) dazu eingerichtet ist, das aus dem Auslauf des mindestens einen Messrohrs austretende Medium aufzunehmen und in die Rohrleitung zu führen.

12. Coriolis-Messaufnehmer nach einem der vorigen Ansprüche,
wobei der Messaufnehmer zwei Prozessanschlüsse (18), insbesondere Flansche (18.1) aufweist, welche dazu eingerichtet sind, den Messaufnehmer mit einer Rohrleitung zu verbinden.

13. Coriolis-Messaufnehmer nach einem der vorigen Ansprüche,
wobei die Magnetvorrichtung mechanisch mit dem zugehörigen Messrohr verbunden ist, und wobei die Spulenvorrichtung bzgl. des Einlaufs bzw. Auslaufs translatorisch sowie rotatorisch fixiert ist.

14. Coriolis-Messgerät (1) umfassend:
Einen Coriolis-Messaufnehmer (10) nach einem der vorigen Ansprüche;
eine elektronische Mess-/Betriebsschaltung (77), wobei die elektronische Mess-/Betriebsschaltung dazu eingerichtet ist, die Spulen und gegebenenfalls zugehörige Temperaturmessvorrichtung elektrisch zu beaufschlagen, wobei die Beaufschlagung der Spule sowie der Temperaturmessvorrichtung mittels separater elektrischer Verbindungen (19) oder mittels eines Multiplexings bewerkstelligt ist,
wobei die mindestens eine elektrische Verbindung (19) eines Sensors bzw. Erregers mittels einer Kabelführung (20) zur elektronischen Mess-/Betriebsschaltung geführt ist,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse (80) zum Behausen der elektronischen Mess-/Betriebsschaltung aufweist.

## Claims

1. Coriolis sensor (10) of a Coriolis measuring device (1), which is designed to measure a mass flow or a density of a medium flowing through at least one measuring tube of the Coriolis measuring device, comprising:
the at least one measuring tube (11) with an inlet (11.1) and an outlet (11.2), wherein said measuring tube is designed to conduct the medium between the inlet and the outlet;
at least one exciter (12), which is designed to excite the at least one measuring tube to produce vibrations;
at least a sensor (13), which is designed to measure the deflection of the vibrations of the at least one measuring tube;
wherein at least one exciter and at least one sensor each have a coil unit (14) in each case with at least a coil (14.1) and in each case have a magnet unit (14.2), wherein the magnet unit and the coil unit can be moved in relation to one another,
wherein the coil unit comprises a printed circuit board (14.4) with at least a printed circuit board layer (14.41), wherein the coil is applied on at least a first side surface (14.411) of a printed circuit board layer,
**characterized in that** at least one exciter or at least one sensor comprises an integrated temperature measurement device (14.3) designed to measure the temperature of the exciter or the sensor,
wherein the temperature measurement device has a resistance measuring section (14.31) made of an electrically conductive material, which is applied on at least the first side surface and/or on at least a second side surface (14.411, 14.412) which is different to the first side surface of the printed circuit board layer.

2. Coriolis sensor as claimed in Claim 1,
wherein the printed circuit board is a multilayer printed circuit board and comprises multiple printed circuit board layers (14.41), wherein said printed circuit board layers are stacked and connected to adjacent printed circuit board layers via lateral surfaces,
wherein the coil comprises multiple sub-coils (14.11) and two coil contacts (14.12),
wherein said sub-coils are arranged, respectively, on different first lateral surfaces,
wherein a coil contact (14.12) is arranged in each case on an end of the coil, and wherein the printed circuit board comprises first vias (14.5), which are designed to electrically interconnect adjacent sub-coils,
wherein the resistance measuring section has two measuring section contacts (14.311).

3. Coriolis sensor as claimed in Claim 1 or 2,
wherein the resistance measuring section (14.31) has an inductance which is at least 10 times, and particularly at least 50 times and preferably at least 200 times lower than an inductance of the coil.

4. Coriolis sensor as claimed in Claim 3,
wherein a first part of the resistance measuring section (14.312) is arranged on a first side surface or a second side surface, wherein at least the first part is at least partially in the form of a meander.

5. Coriolis sensor as claimed in one of the previous claims,
wherein the magnet unit (14.2) comprises at least a permanent magnet (14.21) that has at least one area that is offset in relation to the coil in the direction of a coil axis.

6. Coriolis sensor as claimed in one of the previous claims,
wherein the coil and/or the resistance measuring section are applied on the corresponding lateral surfaces, particularly by means of an etching technology or print technology or screen printing technology or by photochemical means.

7. Coriolis sensor as claimed in one of the previous claims,
wherein the conductive tracks defining the coil or the resistance measuring section have a width of less than 200 micrometers and particularly less than 100 micrometers and preferably less than 70 micrometers.

8. Coriolis sensor as claimed in one of the previous claims,
wherein, with regard to a measuring tube, at least one exciter and at least one sensor or at least two exciters or at least two sensors have an integrated temperature measurement device,
wherein a spatial temperature distribution of the corresponding measuring tube can be determined, allowing a vibration behavior of the corresponding measuring tube to be determined.

9. Coriolis sensor as claimed in one of the previous claims,
wherein the sensor comprises a carrier tube (16) with a carrier tube chamber (16.1), wherein said carrier tube chamber is designed to house the at least one measuring tube at least in sections.

10. Coriolis sensor as claimed in one of the previous claims,
wherein the coil of an exciter is designed to apply a force to the associated magnet unit, and wherein the magnet unit of a sensor is designed to induce an electrical voltage in the coil of the associated coil unit.

11. Coriolis sensor as claimed in one of the previous claims,
wherein the sensor comprises two collectors (17), wherein a first collector (17.1) on a side upstream from the sensor is provided to receive a medium flowing through the sensor from a pipe and to conduct the medium towards the inlet of the at least one measuring tube,
wherein a second collector (17.2) is provided to receive the medium leaving the outlet of the at least one measuring tube and to conduct the medium into the pipe.

12. Coriolis sensor as claimed in one of the previous claims,
wherein the sensor has two process connections (18), particularly flanges (18.1), which are designed to connect the sensor to a pipe.

13. Coriolis sensor as claimed in one of the previous claims,
wherein the magnet unit is mechanically connected to the associated measuring tube, and wherein the coil unit is fixed in a translatory and rotatory manner in relation to the inlet and the outlet.

14. Coriolis measuring device (1) comprising:
a Coriolis sensor (10) as claimed in one of the previous claims;
an electronic measuring/operating circuit (77), wherein the electronic measuring/operating circuit is designed to apply electricity to the coils and to any associated temperature measurement device, wherein the application of electricity to the coil and the temperature measurement device is performed by means of separate electrical connections (19) or by means of multiplexing,
wherein the at least one electrical connection (19) of a sensor or exciter is guided to the electronic measuring/operating circuit by means of a cable run (20),
wherein the electronic measuring/operating circuit is additionally designed to determine and provide flow measured values and/or density measured values,
wherein the measuring device particularly has an electronic housing (80) to house the electronic measuring/operating circuit.

## Revendications

1. Débitmètre Coriolis (10) d'un appareil de mesure de débit à effet Coriolis (1), lequel débitmètre est destiné à mesurer un débit massique ou une densité d'un produit s'écoulant à travers au moins un tube de mesure de l'appareil de mesure de débit à effet Coriolis, comprenant :
l'au moins un tube de mesure (11) avec une entrée (11.1) et une sortie (11.2), lequel tube de mesure est conçu pour guider le produit entre l'entrée et la sortie ;
au moins un excitateur (12), lequel est conçu pour exciter l'au moins un tube de mesure en vibrations ;
au moins un capteur (13), lequel est conçu pour mesurer la déviation des vibrations de l'au moins un tube de mesure ;
l'au moins un excitateur et l'au moins un capteur présentant chacun un dispositif à bobine (14) avec à chaque fois au moins une bobine (14.1) et à chaque fois un dispositif à aimant (14.2), le dispositif à aimant et le dispositif à bobine étant mobiles l'un par rapport à l'autre,
le dispositif à bobine comprenant une carte de circuit imprimé (14.4) avec au moins une couche de carte de circuit imprimé (14.41), la bobine étant appliquée sur au moins une première surface latérale (14.411) d'une couche de carte de circuit imprimé,
**caractérisé en ce qu'**au moins un excitateur ou au moins un capteur comprend un dispositif de mesure de température intégré (14.3) destiné à mesurer la température de l'excitateur ou du capteur,
le dispositif de mesure de température présentant une section de mesure de résistance (14.31) constituée d'un matériau électriquement conducteur, laquelle section est appliquée sur au moins la première surface latérale et/ou sur au moins une deuxième surface latérale (14.411, 14.412) différente de la première surface latérale de la couche de carte de circuit imprimé.

2. Débitmètre Coriolis selon la revendication 1,
pour lequel la carte de circuit imprimé est une carte de circuit imprimé multicouche et comprend une pluralité de couches de carte de circuit imprimé (14.41), lesquelles couches de carte de circuit imprimé sont empilées et reliées à des couches de carte de circuit imprimé adjacentes via des surfaces latérales,
la bobine comprenant une pluralité de sous-bobines (14.11) et deux contacts de bobine (14.12), lesquelles sous-bobines sont disposées respectivement sur des premières surfaces latérales différentes, un contact de bobine (14.12) étant disposé à chaque fois à une extrémité de la bobine, et la carte de circuit imprimé comprenant des premiers trous traversants (14.5), lesquels sont conçus pour relier électriquement des sous-bobines adjacentes les unes aux autres,
la section de mesure de résistance comportant deux contacts de section de mesure (14.311).

3. Débitmètre Coriolis selon la revendication 1 ou 2,
pour lequel la section de mesure de résistance (14.31) présente une inductance qui est au moins 10 fois, notamment au moins 50 fois et de préférence au moins 200 fois inférieure à une inductance de la bobine.

4. Débitmètre Coriolis selon la revendication 3,
pour lequel une première partie de la section de mesure de résistance (14.312) est disposée sur une première surface latérale ou une deuxième surface latérale, au moins la première partie étant au moins partiellement en forme de méandre .

5. Débitmètre Coriolis selon l'une des revendications précédentes,
pour lequel le dispositif à aimant (14.2) comprend au moins un aimant permanent (14.21) présentant au moins une zone décalée de la bobine dans la direction d'un axe de bobine.

6. Débitmètre Coriolis selon l'une des revendications précédentes,
pour lequel la bobine et/ou la section de mesure de résistance sont appliquées sur les surfaces latérales correspondantes, notamment au moyen d'une technique de gravure ou d'une technique d'impression ou d'une technique de sérigraphie ou par voie photochimique.

7. Débitmètre Coriolis selon l'une des revendications précédentes,
pour lequel les pistes conductrices définissant la bobine ou la section de mesure de résistance présentent une largeur inférieure à 200 micromètres et notamment inférieure à 100 micromètres et de préférence inférieure à 70 micromètres.

8. Débitmètre Coriolis selon l'une des revendications précédentes,
pour lequel, par rapport à un tube de mesure, au moins un excitateur et au moins un capteur ou au moins deux excitateurs ou au moins deux capteurs présentent un dispositif de mesure de température intégré,
une répartition spatiale de la température du tube de mesure correspondant pouvant être déterminée, ce par quoi un comportement vibratoire du tube de mesure correspondant peut être déterminé.

9. Débitmètre Coriolis selon l'une des revendications précédentes,
pour lequel le débitmètre comprend un tube porteur (16) avec une chambre de tube porteur (16.1), laquelle chambre de tube porteur est adaptée pour loger l'au moins un tube de mesure au moins par sections.

10. Débitmètre Coriolis selon l'une des revendications précédentes,
pour lequel la bobine d'un excitateur est conçue pour appliquer une force au dispositif à aimant associé, et
pour lequel le dispositif à aimant d'un capteur est conçu pour induire une tension électrique dans la bobine du dispositif à bobine associé.

11. Débitmètre Coriolis selon l'une des revendications précédentes,
pour lequel le débitmètre comprend deux collecteurs (17), un premier collecteur (17.1) sur un côté amont du débitmètre étant prévu pour recevoir un produit s'écoulant dans le débitmètre à partir d'une conduite et pour le guider vers l'entrée de l'au moins un tube de mesure,
un deuxième collecteur (17.2) étant prévu pour recevoir le produit sortant de la sortie de l'au moins un tube de mesure et pour le guider dans la conduite.

12. Débitmètre Coriolis selon l'une des revendications précédentes,
pour lequel le débitmètre comporte deux raccords process (18), notamment des brides (18.1), lesquelles sont adaptées pour relier le débitmètre à une conduite.

13. Débitmètre Coriolis selon l'une des revendications précédentes,
pour lequel le dispositif à aimant est relié mécaniquement au tube de mesure associé, et pour lequel le dispositif à bobine est fixé en translation et en rotation par rapport à l'entrée et à la sortie.

14. Appareil de mesure de débit à effet Coriolis (1) comprenant :
un débitmètre Coriolis (10) selon l'une des revendications précédentes ;
un circuit électronique de mesure/d'exploitation (77), le circuit électronique de mesure/d'exploitation étant conçu pour alimenter électriquement les bobines et le dispositif de mesure de température éventuellement associé, l'alimentation de la bobine ainsi que du dispositif de mesure de température étant effectuée au moyen de connexions électriques séparées (19) ou au moyen d'un multiplexage,
l'au moins une connexion électrique (19) d'un capteur ou d'un excitateur étant guidée vers le circuit électronique de mesure/d'exploitation au moyen d'un guide-câble (20),
le circuit électronique de mesure/d'exploitation étant en outre conçu pour déterminer et
fournir des valeurs de mesure de débit et/ou des valeurs de mesure de densité,
l'appareil de mesure comprenant notamment un boîtier électronique (80) pour loger le circuit électronique de mesure/d'exploitation.
